# EUROPÄISCHE PATENTANMELDUNG

(11) **EP 2 881 643 A1**
(43) Veröffentlichungstag der Anmeldung: **10.06.2015**
(21) Anmeldenummer: 14189812.2
(22) Anmeldetag: 21.10.2014
(51) Int. Cl.: F16L 59/02, F16L 59/04, F16L 59/14, C04B 30/00, C04B 14/06

(54) **Anordnung in einem Gebäude**

(30) Priorität: 21.10.2013 AT 506792013
(71) Anmelder: Dürregger, Nathalie, 4881 Straße im Attergau (AT)
(72) Erfinder: Dürregger, Nathalie, 4881 Straße im Attergau (AT)
(74) Vertreter: Jell, Friedrich

(57) **Zusammenfassung**

Die Erfindung betrifft eine Anordnung in einem Gebäude mit einer flüssigkeitsführenden Leitung (1), nämlich Wasserleitung (13), oder mit einer flüssigkeitsführenden Leitung (1) eines Heiz- und/oder Kühlkreislaufs (12) und mit einem Gehäuse (2, 20), das zwischen seinem äußeren Gehäusemantel (3) und der Leitung (1) einen Füllstoff (4) aufweist. Es wird vorgeschlagen, dass das geschlossene und innen hohle Gehäuse (2, 20) zumindest teilweise mit einem, ein siliziumhaltiges, insbesondere ein siliziumdioxidhaltiges, Granulat (5) aufweisenden Füllstoff (4) gefüllt ist.

## Beschreibung

Die Erfindung betrifft eine Anordnung in einem Gebäude mit einer flüssigkeitsführenden Leitung, nämlich Wasserleitung, oder mit einer flüssigkeitsführenden Leitung eines Heiz- und/oder Kühlkreislaufs und mit einem Gehäuse, das zwischen seinem äußeren Gehäusemantel und der Leitung einen Füllstoff aufweist.

Aus dem Stand der Technik sind Ummantelungen für Leitungen eines Heiz- und/oder Kühlkreislaufs eines Gebäudes bekannt (DE1930611 U), welche Ummantelungen ein schalenförmiges Gehäuse aufweisen, die mit einem Füllstoff aus Steinwolle oder Hartschaumelementen ausgekleidet sind. Davon haben sich Hartschaumelemente aus Gründen der Handhabung bewährt, was mit einem umweltbewussten Standpunkt nicht vereinbar ist.

Außerdem ist es bei einer Bodenverlegung von wärmegedämmten Fernwärmeleitungen bekannt, diese in ein Bett aus Sand vorzusehen. Sand kommt in großen Mengen natürlich vor und enthält Si02, ist jedoch aufgrund seiner Granulatform vergleichsweise schwer handhabbar. Daneben ist bekannt (GB2401921 A), zur Isolierung von Unterseeleitungen, diese mit einem, in ein Gehäuse eingeschlossenem Isoliermaterial, enthaltend Si02-Verbindungen, zu versehen.

Der Erfindung liegt somit die Aufgabe zugrunde, ausgehend vom eingangs geschilderten Stand der Technik, eine Anordnung zu schaffen, bei der ein natürlicher und kostengünstiger Füllstoff einfach handhabbar an einer Leitung eines Heiz- oder Kühlkreislaufes eines Gebäudes auch nachträglich vorgesehen werden kann.

Die Erfindung löst die gestellte Aufgabe dadurch, dass das geschlossene und innen hohle Gehäuse zumindest teilweise mit einem, ein siliziumhaltiges, insbesondere ein siliziumdioxidhaltiges, Granulat aufweisenden Füllstoff gefüllt ist.

Ist das geschlossene und innen hohle Gehäuse zumindest teilweise mit einem, ein siliziumhaltiges, insbesondere ein siliziumdioxidhaltiges, Granulat aufweisenden Füllstoff gefüllt, kann selbst ein Material in Granulatform einfach handhabbar an einer Leitung eines Heiz- und/oder Kühlkreislaufs eines Gebäudes vorgesehen werden. Zudem können die Lufteinschlüsse, die sich zwangsweise durch Hohlräume zwischen den einzelnen Granulatkörnern ausbilden, Vorteile in Richtung einer verbesserten Wärmedämmung mit sich bringen, sodass dieser Füllstoff auch beispielsweise den Wirkungsgrad eines Heiz- und/oder Kühlkreislaufs in einem Gebäude erheblich verbessern kann. Da zudem Silizium nach Sauerstoff das zweithäufigste Element in der Erdkruste ist, kann sich der Füllstoff durch seine nahezu unbeschränkte natürliche Verfügbarkeit als auch durch seine Kostengünstigkeit gegenüber anderen bekannten Füllstoffen auszeichnen. Im Allgemeinen wird erwähnt, dass der Füllstoff insbesondere aus dem Granulat bestehen kann.

Sind zudem die Partikel des Granulats kugelförmig ausgebildet, so kann das innerhalb des Gehäusemantels zur Verfügung stehende Volumen optimal ausgenutzt werden. Des Weiteren kann durch die Kugelform der Partikel die Wärmedämmung nochmals verbessert werden, da die einzelnen Partikel sich nur an einem Punkt mit dem nächstanliegenden Partikel berühren können. Außerdem kann die Kugelform der Granulatpartikel ein maximales Füllen des Gehäuses erlauben, da mit der Kugelform ein gleichmäßiges Fließen des Granulats in den gesamten Hohlraum möglich wird. So kann der Vorgang des Granulateinbringens in das Gehäuse vereinfacht werden, wodurch insgesamt eine kostengünstigere Anordnung geschaffen werden kann.

Sind die Partikel des Granulats als Vollkörper ausgebildet, so kann das Füllmaterial besonders kostengünstig und einfach hergestellt werden. Zudem kann ein Vollkörper eine höhere Formstabilität als ein Hohlkörper aufweisen und damit eine höhere Bruchsicherheit bei der Verarbeitung des Füllstoffes gewährleisten. Zudem lassen sich Vollkörper, gegenüber Hohlkörpern, ohne den Einsatz hochtechnologischer Fertigungsverfahren kostengünstig und einfach herstellen.

Bestehen die Partikel des Granulats aus 68 bis 75 Gew.% SiO₂, 12 bis 18 Gew.% Na₂O, 7 bis 12 Gew.% CaO, 0 bis 5 Gew.% MgO und 0 bis 2,5 Gew.% Al₂O₃ samt herstellungsbedingt unvermeidbaren Verunreinigungen, so kann besonders kostengünstig ein Füllmaterial zur Wärmedämmung bereitgestellt werden. Siliziumdioxid-Verbindungen weisen sehr geringe Wärmeleitfähigkeitswerte auf und eignen sich daher besonders zur Wärmedämmung. Zudem gehören Siliziumdioxid-Verbindungen zu den häufigsten Verbindungen in der Erdkruste und sind daher kostengünstig und leicht zugänglich. Da amorphe Siliziumdioxid-Verbindungen zudem einen sehr geringen Wärmeausdehnungskoeffizient aufweisen, kann erreicht werden, dass sich der Füllstoff bei übermäßiger Erwärmung nur in geringem Maße ausdehnt. So können außerordentliche Belastungen auf den Gehäusemantel durch einen unter Temperaturerhöhung stark expandierenden Füllstoff vermieden werden. Im Allgemeinen wird erwähnt, dass das Granulat herstellungsbedingt unvermeidbare Verunreinigungen mit jeweils maximal 0,05 Gew.-% und gesamt höchstens 1 Gew.-% aufweisen kann.

Die Wärmedämmung des Füllmaterials kann zudem verbessert werden, wenn das Granulat, kristallines SiO₂, insbesondere kristallinen Quarz enthält.

Eine vorteilhafte Ausführungsart der Erfindung kann erreicht werden, wenn der Füllstoff eine Schüttdichte von 1,2 bis 1,8 g/cm3 aufweist. Dadurch kann das Füllgewicht effektiv reduziert werden und die benötigte Menge an Füllstoff reduziert werden. Zusätzlich entstehen bei einer geringen Schüttdichte zwischen den Partikeln des Granulats vorteilhafterweise Lufteinschlüsse, welche die Wärmedämmung weiter verbessern können. Vorzugsweise 1,5 g/cm3 hat sich besonders hierfür ausgezeichnet, insbesondere auch in Hinblick auf eine zusätzliche Befüllbarkeit des Gehäuses mit einem wärmeisolierenden Gas, vorzugsweise Edelgas.

Wird das Gehäuse zusätzlich mit einem Edelgas, insbesondere Argon, Krypton oder Xenon, gefüllt, so kann aufgrund der sehr geringen Wärmeleitfähigkeit der Edelgase die Wärmedämmung der Anordnung weiter verbessert werden. Daneben kann die Anordnung auf einfache Weise mit den genannten Edelgasen befüllt werden, da diese eine höhere Dichte als Luft aufweisen. Dadurch kann die Luft aus dem Gehäuse verdrängt werden, ohne dass diese nach dem Befüllen aus dem Gehäuse entweicht.

Bildet die flüssigkeitsführende Leitung einen Teil des Gehäuses aus, kann Material für das Gehäuse reduziert werden und sich damit eine besonders kostengünstige Anordnung ergeben.

Diese Anordnung kann weiter optimiert werden, wenn das geschlossene Gehäuse ein stirnseitig geschlossenes doppelwandiges Rohr aufweist, dessen inneres Rohr die flüssigkeitsführende Leitung und dessen äußeres Rohr den äußeren Gehäusemantel des Gehäuses ausbildet. Auf diese Weise können Leitung und Gehäuse in einem Arbeitsgang montiert bzw. damit an den Heiz- und/oder Kühlkreislauf bzw. der Wasserleitung angeschlossen werden, was eine Vereinfachung in der Handhabung ergeben kann.

Schließt das Gehäuse an der flüssigkeitsführenden Leitung an, kann ein nachträgliches Vorsehen des Gehäuses mit Füllwerkstoff erleichtert durchgeführt werden.

Diese Montage kann weiter erleichtert werden, wenn das Gehäuse mindestens zwei Schalen ausbildet, die miteinander verbunden zwischen sich die flüssigkeitsführende Leitung aufnehmen. Die Verbindung der Schalen miteinander kann auf unterschiedliche Weise erfolgen. Denkbar ist sowohl ein Schnappmechanismus als auch eine Montage mit Schrauben, Kleber oder dergleichen.

Im Allgemeinen wird festgehalten, dass eine Ausbildung des Gehäuses aus zwei Halbschalen für die Montage besonders vorteilhaft erscheint, aber auch Ummantelungen aus mehreren Schalenelementen denkbar sind. Bei schwer zugänglichen, verwinkelten oder knapp an der Wand verlegten Leitungen kann sich unter Umständen ein Gehäuse aus mehr als zwei Schalenteilen auszeichnen.

Auszeichnen kann sich die Verwendung eines geschlossenen und innen hohlen Gehäuses, das zumindest teilweise mit einem ein siliziumhaltiges Granulat aufweisenden Füllstoff gefüllt ist, zur Ummantelung oder Ausbildung einer flüssigkeitsführenden Leitung eines Gebäudes, insbesondere für einen Heiz- und/oder Kühlkreislauf oder für eine Wasserleitung, wobei das Gehäuse auch einen Teil der Leitung ausbilden kann.

Insbesondere wenn bei der Verwendung, das Gehäuse, bei einem bestehenden Leitungsnetz nachträglich vorgesehen wird, kann sich die Erfindung besonders auszeichnen, da auch die nachträgliche Anbringung des Gehäuses leicht durchgeführt werden kann.

In den Figuren ist beispielsweise der Erfindungsgegenstand anhand mehrerer Ausführungsbeispiele näher dargestellt. Es zeigen
- Fig. 1: eine aufgerissene Vorderansicht einer Anordnung nach einem ersten Ausführungsbeispiel,
- Fig. 2: eine Schnittansicht nach II-II der Fig. 1,
- Fig. 3: eine aufgerissene Vorderansicht einer Anordnung nach einem weiteren Ausführungsbeispiel und
- Fig. 4: eine Schnittansicht nach IV-IV gemäß Fig. 3.

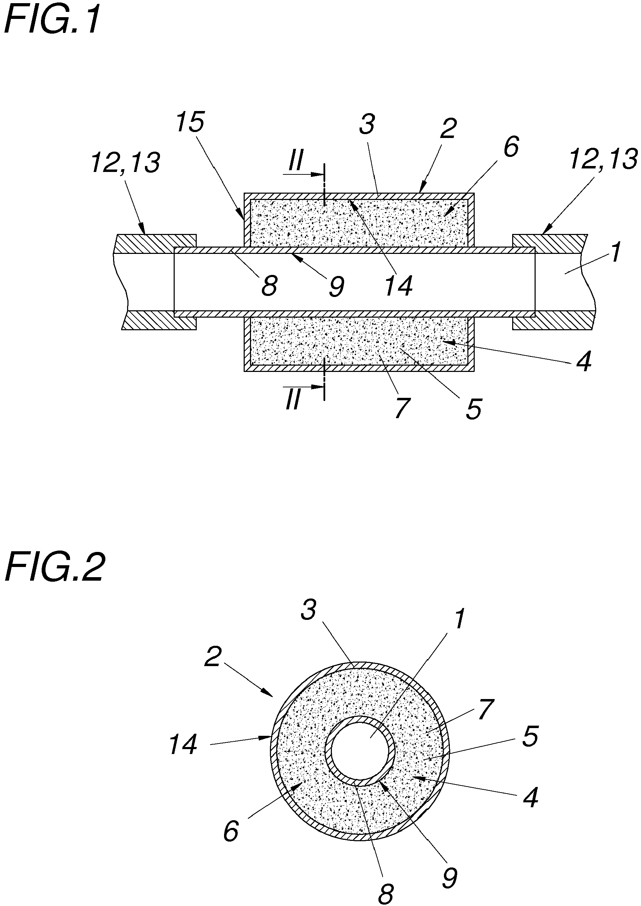

Gemäß den Figuren 1 und 2 wird beispielsweise eine aufgerissene Vorderansicht einer ersten Anordnung mit einer flüssigkeitsführenden Leitung 1 eines Heiz- und/oder Kühlkreislaufs 12 eines nicht näher dargestellten Gebäudes, beispielsweise Hauses, gezeigt. Dieser Heiz- und/oder Kühlkreislauf 12 ist mit einem Gehäuse 2 versehen. Zwischen dem äußeren Gehäusemantel 3 des Gehäuses 2 und der Leitung 1 ist ein Füllstoff 4 vorgesehen.

Hierzu weist erfindungsgemäß das geschlossene und innen hohle Gehäuse 2 einen inneren Hohlraum 6 auf, der mit diesem Füllstoff 4 aus siliziumhaltigem Granulat 5 gefüllt ist. Der Füllstoff 4 wird daher zwischen äußerem Gehäusemantel 3 und Leitung 1 sicher vorgesehen. Dieser in hohem Masse verfügbare Silizium-Rohstoff, insbesondere aufweisend eine Siliziumdioxid-Verbindung, ermöglicht eine kostengünstige und umweltfreundliche Ummantelung der Leitung 1. Zusätzlich erhöhen die Gaseinschlüsse, beispielsweise Lufteinschlüsse, zwischen den Granulatkörnern die Wärmedämmung der Leitung 1, was die Erfindung weiter auszeichnet. Insbesondere ein Edelgas vorzugsweise Argon verbessert die Wärmedämmung noch weiter, wenn dies mitsamt dem Füllstoff 4 im Gehäuse vorgesehen wird.

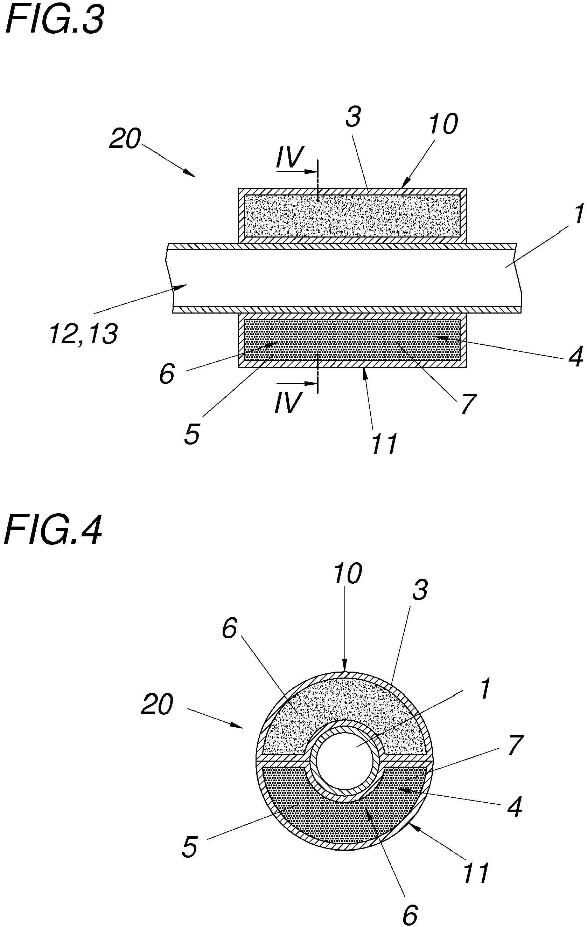

Wie im Vergleich der Schraffuren von Fig. 1 un Fig. 3 zu erkennen, können die Partikel 7 des Granulats 5 in Bruchform oder in Kugelform als Füllstoff 4 verwendet werden. Besonders wichtig ist jedoch, dass diese als Vollkörper verwendet werden, um einen kostengünstigen Füllstoff 4 zu gewährleisten.

Im Allgemeinen wird erwähnt, dass durch die Verwendung von Siliziumdioxid weitere positive Effekte in der Anordnung ausgenutzt werden können. So wird aufgrund der geringen Wärmeleitfähigkeit des Siliziumdioxids eine ausgezeichnete Wärmedämmung erreicht. Daneben weisen Si02-Verbindungen auch einen geringen Wärmeausdehnungskoeffizient auf, wodurch auch bei großen positiven Temperaturschwankungen keine zusätzliche Belastung auf das Gehäuse 2 durch Ausdehnen des Füllstoffs 4 ausgeübt wird. Durch die kugelförmigen Partikel 7 ergeben sich nochmals verbesserte Wärmedämmwerte, da die Berührung der Partikel 7 untereinander minimal bleibt. All dies kann sich insbesondere durch eine Schüttdichte von 1,2 bis 1,8 g/cm3, vorzugsweise von 1,5 g/cm3, des Füllstoffs 4 weiter verbessern. Beispielsweise hat sich folgende Zusammensetzung der Partikel 7 des Granulats 5 als besonders vorteilhaft herausgestellt, nämlich 68 bis 75 Gew.% Si02, 12 bis 18 Gew.% Na20, 7 bis 12 Gew.% CaO, 0 bis 5 Gew.% MgO und 0 bis 2,5 Gew.% Al2O3 samt herstellungsbedingt unvermeidbaren Verunreinigungen.

Auch kann das Granulats 5 kristallines Si02, insbesondere kristallinen Quarz, enthalten, damit sich die Wärmedämmung noch weiter verbessert.

In der beispielhaften Ausführung nach Fig. 1 bzw. Fig. 2 ist eine Anordnung dargestellt, bei der die Leitung 1, einen Teil der inneren Gehäusewand 8 des Gehäuses 2 ausbildet. Das geschlossene Gehäuse 2 in Fig. 1 ist als doppelwandiges stirnseitig geschlossenes Rohr ausgeführt. Dabei bildet das innere Rohr 9 zugleich die Leitung 1 für den Heiz- oder Kühlkreislauf 12 aus. Ein äußeres Rohr 14 mitsamt seinem stirnseitigen Verschluss 15 bildet den äußeren Gehäusemantel 3 des Gehäuses 2 aus. Diese Anordnung ist besonders vorteilhaft, weil Leitung 1 und Gehäuse 2 mit Füllstoff 4 gemeinsam montiert werden.

Im zweiten Ausführungsbeispiel entsprechend Fig. 3 und Fig. 4 ist eine Anordnung mit einem anderen Gehäuse 20 dargestellt, das aus zwei geschlossenen Schalen 10, 11 bzw. Halbschalen ausgebildet wird. Diese Anordnung kann sich besonders auszeichnen, wenn das Gehäuse 20 nachträglich, zum Beispiel an der Wasserleitung 13, vorzugsweise an der Wasserzuleitung im Gebäude, angebracht werden soll. Natürlich ist die Anbringung der Schalen auch an Leitungen für den Heiz- oder Kühlkreislauf eines Gebäudes denkbar. Beide Schalen 10, 11 werden durch eine nicht näher dargestellte Schnappverbindung miteinander fest verbunden. Auch Gehäuse 20 aus mehr als zwei Schalen sind denkbar, hier aber nicht näher dargestellt. Als Verbindung zwischen den Schalen können sich insbesondere Schnappverbindungen eignen, um diese für Wartungszwecke von der flüssigkeitsführenden Leitung 1 leicht lösen zu können.

Im Allgemeinen wird erwähnt, dass selbstverständlich beide Gehäuse 2, 20 bei einer flüssigkeitsführenden Leitung 1, nämlich eine Wasserleitung 13, oder bei einer flüssigkeitsführenden Leitung 1 eines Heiz- und/oder Kühlkreislaufs 12 verwendet werden können. Im Allgemeinen wird erwähnt, dass bekanntermaßen auch der Wärmeträger eines Heiz- und/oder Kühlkreislaufs 12 eine Wasserbasis aufweisen kann.

## Patentansprüche

1. Anordnung in einem Gebäude mit einer flüssigkeitsführenden Leitung (1), nämlich Wasserleitung (13), oder mit einer flüssigkeitsführenden Leitung (1) eines Heiz- und/oder Kühlkreislaufs (12) und mit einem Gehäuse (2, 20), das zwischen seinem äußeren Gehäusemantel (3) und der Leitung (1) einen Füllstoff (4) aufweist, **dadurch gekennzeichnet, dass** das geschlossene und innen hohle Gehäuse (2, 20) zumindest teilweise mit einem, ein siliziumhaltiges, insbesondere ein siliziumdioxidhaltiges, Granulat (5) aufweisenden Füllstoff (4) gefüllt ist.

2. Anordnung nach Anspruch 1, **dadurch gekennzeichnet, dass** die Partikel (7) des Granulats (5) kugelförmig ausgebildet sind.

3. Anordnung nach Anspruch 1 oder 2, **dadurch gekennzeichnet, dass** die Partikel (7) des Granulats (5) als Vollkörper ausgebildet sind.

4. Anordnung nach Anspruch 1, 2 oder 3, **dadurch gekennzeichnet, dass** die Partikel (7) des Granulats (5) aus
| | | |
|---|---|---|
| 68 bis 75 | Gew.% | SiO₂, |
| 12 bis 18 | Gew.% | Na₂O, |
| 7 bis 12 | Gew.% | CaO, |
| 0 bis 5 | Gew.% | MgO und |
| 0 bis 2,5 | Gew.% | Al₂O₃ |
samt herstellungsbedingt unvermeidbaren Verunreinigungen bestehen.

5. Anordnung nach einem der Ansprüche 1 bis 4, **dadurch gekennzeichnet, dass** das Granulat (5), kristallines SiO₂, insbesondere kristallinen Quarz enthält.

6. Anordnung nach einem der Ansprüche 1 bis 5, **dadurch gekennzeichnet, dass** der Füllstoff (4) eine Schüttdichte von 1,2 bis 1,8 g/cm³, insbesondere 1,5 g/cm³, aufweist.

7. Anordnung nach einem der Ansprüche 1 bis 6, **dadurch gekennzeichnet, dass** das Gehäuse (2) zusätzlich mit einem Edelgas, insbesondere Argon, Krypton oder Xenon, gefüllt ist.

8. Anordnung nach einem der Ansprüche 1 bis 7, **dadurch gekennzeichnet, dass** die flüssigkeitsführende Leitung (1) einen Teil des Gehäuses (2) ausbildet.

9. Anordnung nach Anspruch 8, **dadurch gekennzeichnet, dass** das geschlossene Gehäuse (2) ein stirnseitig geschlossenes doppelwandiges Rohr aufweist, dessen inneres Rohr (9) die flüssigkeitsführende Leitung (1) und dessen äußeres Rohr (14) den äußeren Gehäusemantel (3) des Gehäuses (2) ausbildet.

10. Anordnung nach einem der Ansprüche 1 bis 7, **dadurch gekennzeichnet, dass** das Gehäuse (20) an der flüssigkeitsführenden Leitung (1) anschließt.

11. Anordnung nach Anspruch 10, **dadurch gekennzeichnet, dass** das Gehäuse (20) mindestens zwei Schalen (10, 11) ausbildet, die miteinander verbunden zwischen sich die flüssigkeitsführende Leitung (1) aufnehmen.

12. Verwendung eines geschlossenen und innen hohlen Gehäuses (2, 20), das zumindest teilweise mit einem ein siliziumhaltiges Granulat (5) aufweisenden Füllstoff (4) gefüllt ist, zur Ummantelung oder Ausbildung einer flüssigkeitsführenden Leitung (1) eines Gebäudes, insbesondere für einen Heiz- und/oder Kühlkreislauf (12) oder für eine Wasserleitung (13).

13. Verwendung nach Anspruch 12, dass das Gehäuse (2, 20), bei einem bestehenden Leitungsnetz (12, 15) nachträglich vorgesehen wird.
